# EUROPEAN PATENT SPECIFICATION

(11) **EP 3 436 746 B1**
(45) Date of publication and mention of the grant of the patent: **22.01.2020**
(21) Application number: 17715850.8
(22) Date of filing: 21.03.2017
(51) Int. Cl.: F23R 3/10, F23R 3/34, F23R 3/50, F23R 3/42, F23R 3/46

(54) **INJECTOR ASSEMBLY AND DUCTING ARRANGEMENT INCLUDING SUCH INJECTOR ASSEMBLIES IN A COMBUSTION SYSTEM FOR A GAS TURBINE ENGINE**
EINSPRITZANORDNUNG UND LEITUNGSANORDNUNG MIT SOLCHEN EINSPRITZANORDNUNGEN IN EINEM VERBRENNUNGSSYSTEM FÜR EINEN GASTURBINENMOTOR
ENSEMBLE INJECTEUR ET AGENCEMENT DE CONDUITS COMPORTANT DE TELS ENSEMBLES INJECTEURS DANS UN SYSTÈME DE COMBUSTION POUR TURBINE À GAZ

(30) Priority: 30.03.2016 US 201615085067
(43) Date of publication of application: 06.02.2019
(73) Proprietor: Siemens Energy, Inc., Orlando, FL 32826-2399 (US)
(72) Inventor: NORTH, Andrew J., Orlando Florida 32829 (US); PORTILLLO BILBAO, Juan Enrique, Oviedo Florida 32766 (US); LASTER, Walter Ray, Oviedo Florida 32766 (US); MEADOWS, Joseph, Charlotte North Carolina 28278 (US)
(74) Representative: Patentanwaltskanzlei WILHELM & BECK
(86) International application number: PCT/US2017/023331
(87) International publication number: WO 2017/172408

(56) References cited:
- EP-A1- 2 808 612
- US-A1- 2010 242 482
- US-A1- 2015 285 504

## Description

### BACKGROUND

### 1. Field

Disclosed embodiments are generally related to combustion turbine engines, such as gas turbine engines and, more particularly, to injector assemblies and ducting arrangement including such assemblies in combustion system for a gas turbine engine.

### 2. Description of the Related Art

In gas turbine engines, fuel is delivered from a fuel source to a combustion section where the fuel is mixed with air and ignited to generate hot combustion products that define working gases. The working gases are directed to a turbine section where they effect rotation of a turbine rotor. It is known that production of NOx emissions can be reduced by reducing the residence time in the combustor. The residence time in the combustion section may be reduced by providing a portion of the fuel to be ignited downstream from a main combustion stage. This approach is referred to in the art as a distributed combustion system (DCS). See, for example, US patents 8,375,726 and 8,752, 386.

It is also known that certain ducting arrangements in a gas turbine engine may be configured to appropriately align the flow of working gases, so that, for example, such flow alignment may be tailored to avoid the need of a first stage of flow-directing vanes in the turbine section of the engine. See for example US patents 7,721,547 and 8,276,389. From document EP 2 808 612 A1 a gas turbine combustion chamber with tangential late lean injection is known. From document US 2010/242482 A1 a method and system for reducing the level of emissions generated by a system is known. From document US 2015/285504 A1 a trapped vortex fuel injector and method for manufacture is known.

### BRIEF DESCRIPTION OF THE DRAWINGS

FIG. 1 is a fragmentary schematic representation of an assembly of combustor transition ducts that may include a respective flow-accelerating structure, such as a flow-accelerating cone, that may be configured with disclosed injector assemblies.
FIG. 2 is a schematic representation of one non-limiting embodiment of a disclosed injector assembly.
FIG. 3 is an isometric view illustrating respective outlet sides of a reactant-guiding structure and a cross-flow guiding structure in a disclosed injector assembly.
FIG. 4 is an isometric view illustrating an inlet side of the cross-flow guiding structure shown in FIG. 3.
FIG. 5 is an isometric view illustrating respective outlet sides of a reactant-guiding structure and a cross-flow guiding structure in another non-limiting embodiment of a disclosed injector assembly.
FIG. 6 is an isometric view illustrating an inlet side of the cross-flow guiding structure shown in FIG. 5.
FIG. 7 is a schematic of yet another non-limiting embodiment of a disclosed injector assembly comprising bifurcated structures.
FIG. 8 is a schematic of still another non-limiting embodiment of a disclosed injector assembly comprising nested structures.
FIG. 9 is a schematic representation of yet still another non-limiting embodiment of a disclosed injector assembly.
FIG. 10 is a schematic representation of a further non-limiting embodiment of a disclosed injector assembly.
FIG. 11 is an elevational view depicting an array of injection orifices configured to inject a corresponding array of respective portions of cross-flow of combustion gases for mixing with a flow of reactants, as may be obtained with the injector assembly illustrated in FIG. 10.
FIG. 12 is a schematic representation of still a further non-limiting embodiment of a disclosed injector assembly.
FIG. 13 is an elevational view depicting respective arrays of injection orifices configured to inject an array of respective reactant flows for mixing with an array of respective portions of cross-flow of combustion gases, as may be obtained with the injector assembly illustrated in FIG. 12.
FIG. 14 is a flow chart listing certain steps that may be used in a disclosed method for manufacturing an injector assembly or a ducting arrangement including such injector assemblies, as may be used for a combustion system in a gas turbine engine.
FIG. 15 is a flow chart listing further steps that may be used in the disclosed method for manufacturing the injector assembly or the ducting arrangement.
FIG. 16 is a flow sequence in connection with the disclosed method for manufacturing the injector assembly or the ducting arrangement.

### DETAILED DESCRIPTION

There are certain advantages that can result from the integration of combustor design approaches, such as may involve a distributed combustion system (DCS) approach, and an advanced ducting approach in the combustor system of a combustion turbine engine, such as a gas turbine engine. For example, with appropriate integration of these design approaches, it is contemplated to achieve a decreased static temperature and a reduced combustion residence time, each of which is conducive to reduce NOx emissions to be within acceptable levels at turbine inlet temperatures of approximately 1700°C (3200°F) and above.

For example, by injecting reactants (e.g., fuel and air) through a number of injector assemblies (as each may comprise an assembly of an air scoop and a fuel nozzle) disposed in a secondary combustion stage downstream from the main combustion stage, it is feasible to keep the reaction temperature below the NOx formation threshold, even though the firing temperature may be 1700°C and above. In certain embodiments, this secondary combustion stage may involve a flow-accelerating structure that passes a cross-flow of combustion gases (e.g., vitiated gases from the main combustion zone) that can reach relatively high subsonic speeds, which is conducive to achieve the decreased static temperature and the reduced combustion residence time.

The present inventors have recognized that at the relatively high subsonic speeds of the passing cross-flow of combustion gases, there may be a substantial drop in the total pressure of the system, which may not be desirable. In view of such recognition, the present inventors propose innovative injector assemblies appropriately configured to reduce the magnitude of such pressure loss while achieving an effective level of mixing of the injected reactants with the passing cross-flow of combustion gases.

The present inventors have further recognized that traditional manufacturing techniques may not be conducive to a cost-effective and/or realizable manufacturing of injector assembly configurations that may be involved to efficiently implement the foregoing approaches. For example, traditional manufacturing techniques tend to fall somewhat short from consistently limiting manufacturing variability; and may also fall short from cost-effectively and reliably producing the relatively complex geometries and miniaturized features and/or conduits that may be involved in such combustor components.

In view of this further recognition, the present inventors further propose use of three-dimensional (3D) Printing/Additive Manufacturing (AM) technologies, such as laser sintering, selective laser melting (SLM), direct metal laser sintering (DMLS), electron beam sintering (EBS), electron beam melting (EBM), etc., that may be conducive to cost-effectively making disclosed injector assemblies that may involve complex geometries and miniaturized features and/or conduits. For readers desirous of general background information in connection with 3D Printing/Additive Manufacturing (AM) technologies, see, for example, textbook titled "Additive Manufacturing Technologies, 3D Printing, Rapid Prototyping, and Direct Digital Manufacturing", by Gibson I., Stucker B., and Rosen D., 2010, published by Springer.

In the following detailed description, various specific details are set forth in order to provide a thorough understanding of such embodiments. However, those skilled in the art will understand that embodiments of the present invention may be practiced without these specific details, that the present invention is not limited to the depicted embodiments, and that the present invention may be practiced in a variety of alternative embodiments. In other instances, methods, procedures, and components, which would be well-understood by one skilled in the art have not been described in detail to avoid unnecessary and burdensome explanation.

Furthermore, various operations may be described as multiple discrete steps performed in a manner that is helpful for understanding embodiments of the present invention. However, the order of description should not be construed as to imply that these operations need be performed in the order they are presented, nor that they are even order dependent, unless otherwise indicated. Moreover, repeated usage of the phrase "in one embodiment" does not necessarily refer to the same embodiment, although it may. It is noted that disclosed embodiments need not be construed as mutually exclusive embodiments, since aspects of such disclosed embodiments may be appropriately combined by one skilled in the art depending on the needs of a given application.

The terms "comprising", "including", "having", and the like, as used in the present application, are intended to be synonymous unless otherwise indicated. Lastly, as used herein, the phrases "configured to" or "arranged to" embrace the concept that the feature preceding the phrases "configured to" or "arranged to" is intentionally and specifically designed or made to act or function in a specific way and should not be construed to mean that the feature just has a capability or suitability to act or function in the specified way, unless so indicated.

In one non-limiting embodiment, a disclosed injector assembly may comprise a unitized injector assembly. The term "unitized" in the context of this application, unless otherwise stated, refers to a structure which is formed as a single piece (e.g., monolithic construction) using a rapid manufacturing technology, such as without limitation, 3D Printing/Additive Manufacturing (AM) technology, where the unitized structure, singly or in combination with other unitized structures, can form a component of the combustion turbine engine, such as for example respective injector assemblies, or an entire ducting arrangement including such assemblies.

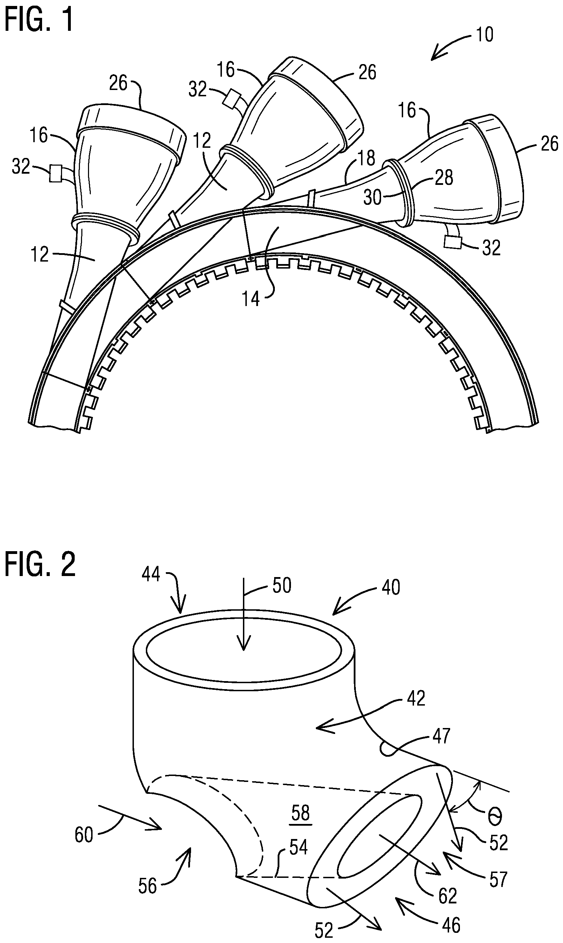

FIG. 1 is a fragmentary schematic representation of an assembly of combustor transition ducts 10 in a combustor system of a combustion turbine engine, such as a gas turbine engine. In assembly 10, a plurality of flow paths 12 blends smoothly into a single, annular chamber 14. Each flow path 12 may be configured to deliver combustion gases formed in a respective combustor to a turbine section of the engine without a need of a first stage of flow-directing vanes in the turbine section of the engine.

In one non-limiting embodiment, each flow path 12 may include a cone 16 and an integrated exit piece (IEP) 18. Each cone 16 has a cone inlet 26 having a circular cross section and configured to receive the combustion gases from a combustor outlet (not shown). The cross-sectional profile of cone 16 narrows toward a cone outlet 28 that is associated with an IEP inlet 30 in fluid communication with each other.

Based on the narrowing cross-sectional profile of cone 16, as the flow travels from cone inlet 26 to cone outlet 28, the flow of combustion gases is accelerated to a relatively high subsonic Mach (Ma) number, such as without limitation may comprise a range from approximately 0.3 Ma to approximately 0.8 Ma, and thus cone 16 may be generally conceptualized as a non-limiting embodiment of a flow-accelerating structure. Accordingly, the combustion gases may flow through cone 16 with an increasing flow speed, and as a result, this flow of combustion gases can experience a decreasing static temperature in cone 16, and a reduced combustion residence time, each of which is conducive to reduce NOx emissions at the high firing temperatures of a combustion turbine engine.

By injecting reactants at locations of the cone having a relatively lower static temperature, such as a location between cone inlet 26 and cone outlet 28, it is feasible to effectively bring the reaction temperature below the NOx formation threshold even though, in certain non-limiting embodiments, the firing temperature may be approximately 1700°C and higher. That is, the injector location may be in a location where the static temperature of the gases, once burned, will be lower compared to the burned static temperature if the reactants were injected at cone inlet 26.

For the sake of simplicity of illustration, FIG. 1 illustrates a conceptual schematic of a single injector assembly 32 in connection with each of the cones illustrated in FIG. 1; it will be appreciated, however, that multiple injectors may be circumferentially distributed in each cone 16. In one non-limiting embodiment, the circumferentially arranged injector assemblies may comprise two or more rows of circumferentially arranged injector assemblies. In one non-limiting embodiment, a respective number of injector assemblies in each of such two or more rows of circumferentially arranged injector assemblies can vary depending on the needs of a given application.

It will be further appreciated that disclosed injector assemblies need not be limited to applications involving a flow-accelerating structure since any application involving a cross-flow comprising a relatively high subsonic Mach (Ma) number can benefit from such injector assemblies. Structural detail and/or operational relationships in connection with disclosed injector assemblies are elaborated in greater detail below.

FIG. 2 is a schematic of one non-limiting embodiment of a disclosed injector assembly 40. As noted above, injector assembly 40 may be disposed in a combustion stage fluidly coupled to receive a cross-flow of combustion gases from a combustor outlet (not shown). Injector assembly 40 may include a reactant-guiding structure 42 having an inlet side 44 and an outlet side 46. Reactant-guiding structure may define a curvilinear flow path 47 to route a flow of reactants from a first flow direction at the inlet side (schematically represented by arrow 50) to a second flow direction at the outlet side (schematically represented by arrows 52) toward the cross-flow of combustion gases.

The second flow direction may be arranged to achieve a desired injection angle of the flow of reactants relative to the cross-flow of combustion gases. The desired injection angle may be chosen to reduce pressure loss, which otherwise would develop in the presence of a substantially-perpendicular injection of the flow of reactants into the cross-flow, that as noted above, may involve a relatively high subsonic Mach number.

In one non-limiting embodiment, the desired injection angle of the flow of reactants relative to the cross-flow of combustion gases may be in a range from approximately 0° to approximately 90°, as schematically represented by angle θ in FIG. 2. An angle θ of approximately 90° represents the case when the flow of reactants is injected substantially perpendicular to the cross flow, whereas an angle θ of approximately 0° represents the case where the flow of reactants is injected substantially parallel to the cross flow.

It will be appreciated that as the injection angle θ approaches 0°, there would be a corresponding decrease in pressure loss, with a maximal decrease in pressure loss achieved when the angle θ is approximately 0°. Conversely, as the injection angle approaches 90°, there would be a corresponding increase in pressure loss, with a no decrease in pressure loss when the angle θ is approximately 90°; however, there may be applications (e.g., for applications involving a relatively low Mach cross flow) where a 90° injection angle case may improve entrainment/mixing between the cross flow and the flow reactants. It will be appreciated that any injection angle in a range comprising 0°≤ angle θ ≤90° can influence both total pressure loss and momentum flux ratio. For example, increasing the angle from 0° to 90° will increase the momentum flux ratio and total pressure loss; while decreasing the angle from 90° to 0° will decrease the momentum flux ratio and total pressure loss; therefore, an optimum injection angle may be appropriately chosen depending on the needs of a give application, such as cross flow conditions, etc.

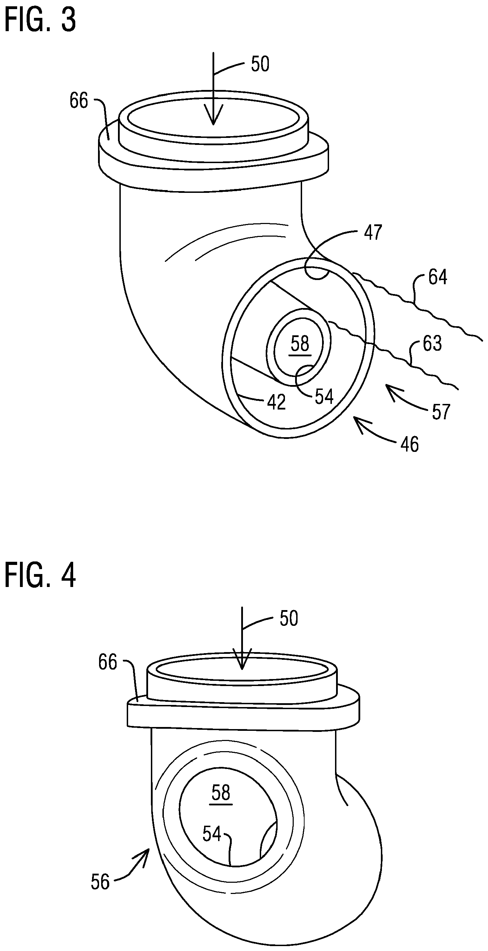

In this embodiment, injector assembly 40 may further define a cross-flow guiding structure 54 having an inlet side 56 (as may be better appreciated in FIG. 4) and an outlet side 57. Cross-flow guiding structure 54 may define a generally axially-extending flow path 58 to route through the injector assembly a portion of the cross-flow of combustion gases received at the inlet side 56 of the cross-flow guiding structure 54 (schematically represented by arrow 60 in FIG. 2) toward the outlet side 57 of cross-flow guiding structure 54 (schematically represented by arrow 62). Unless otherwise indicated, the term "generally axially-extending flow path" refers to a flow path straight or otherwise that conveys the cross-flow of combustion gases from an upstream location to a downstream location relative to the longitudinal axis of the turbine engine.

In one non-limiting embodiment, disclosed injector assemblies involving a reactant-guiding structure and cross-flow guiding structure may constitute a unitized structure. In certain embodiments, a ducting arrangement comprising disclosed injector assemblies and a respective flow-accelerating structure may constitute a unitized structure. Without limitation, practical embodiments may comprise at least some fluid flow conduits having a minimum diameter in a range from about 1 mm to about 30 mm.

In one non-limiting embodiment, the flow of reactants exiting at the outlet side 46 of reactant-guiding structure 42 and the portion of the cross-flow of combustion gases exiting at the outlet side 57 of cross-flow guiding structure 54 may be arranged relative to one another to form substantially concentric co-flows that may in turn form a first co-mixing flow interface (schematically represented by roughened line 63 (FIG. 3) between an inner portion (e.g., inner annulus) of the exiting flow of reactants and a corresponding portion of the exiting portion of the cross-flow of combustion gases. Similarly, the flow of reactants exiting at the outlet side of the reactant-guiding structure and a cross-flow of combustion gases passing along a periphery of the injector assembly may be arranged relative to one another to form a second co-mixing flow interface (schematically represented by roughened line 64) between an outer portion of the exiting flow of reactants (e.g., outer annulus) and a corresponding portion of the passing cross-flow of combustion gases. That is, cross-flow of combustion gases externally passing around the body of injector assembly 40.

It will be appreciated that aspects of the present invention are not limited to concentric annuli or to coaxial co-flows. For example, a flow direction of the portion of the cross-flow of combustion gases exiting at the outlet side 57 of cross-flow guiding structure 54 (schematically represented by arrow 62 in FIG. 2) may be arranged to achieve a desired injection angle relative to the flow direction of the flow of reactants at the outlet side 46 of reactant-guiding structure 42, (schematically represented by arrow 52 in FIG. 2). That is, the injection angle for the flow of reactants need not be the same injection angle for the portion of the cross-flow of combustion gases exiting at the outlet side 57. Moreover, the exiting flows need not be configured as respective annuli since other configurations may be implemented.

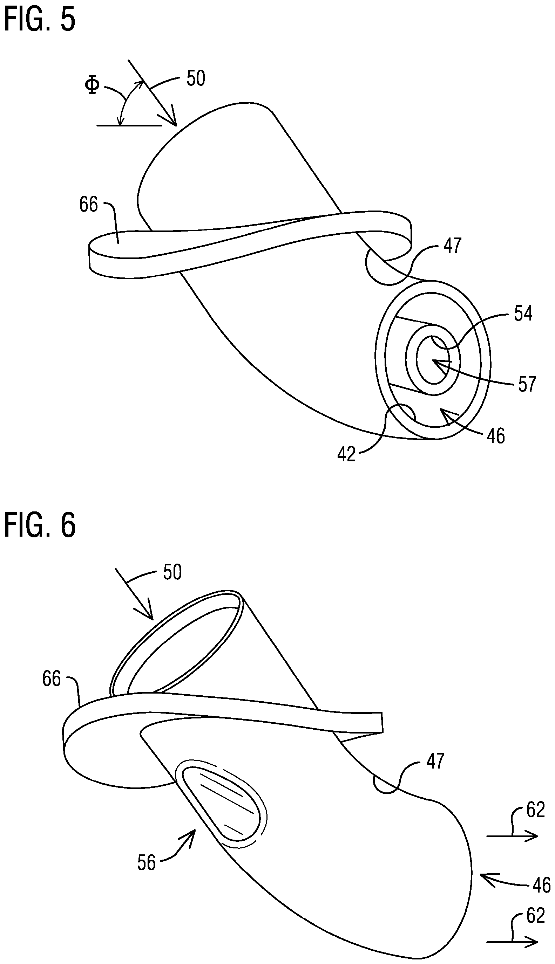

FIG. 5 is an isometric view illustrating respective outlet sides 46, 57 of reactant-guiding structure 42 and cross-flow guiding structure 54 in another non-limiting embodiment of a disclosed injector assembly. In lieu of first flow direction 50 being perpendicular relative to a combustor wall surface 66 through which the injector assembly may be admitted into the combustion zone (see FIGs 3 and 4), in this embodiment, first flow direction 50 may be inclined at an angle Φ (FIG. 5) relative to a horizontal plane, e.g., relative to wall surface 66. In one non-limiting embodiment, the angle of first flow direction 50 may range from approximately 90° (e.g., perpendicular to wall surface 66) to approximately 45° toward the cross-flow of combustion gases. The inclination angle Φ is effective to increase the radius of curvature of curvilinear flow path 47 for routing the flow of reactants from first flow direction 50 at the inlet side to the second flow direction at the outlet side 46 of reactant-guiding structure 42 and may be helpful to reduce the possibility of flashback events.

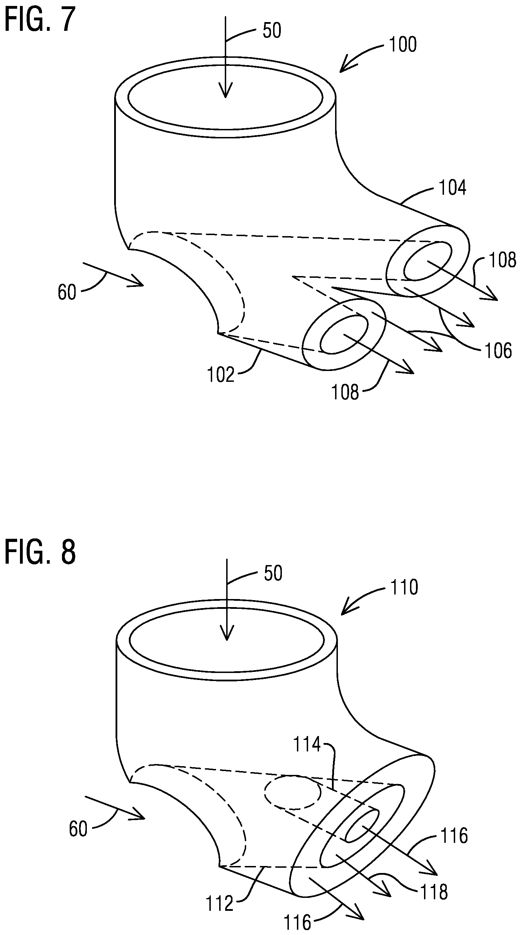

FIG. 7 is a schematic of yet another non-limiting embodiment of a disclosed injector assembly 100 comprising bifurcated structures 102, 104 to provide respective bifurcated flow of reactants 106 for mixing with respective bifurcated portions 108 of the cross-flow of combustion gases. It will be appreciated that the illustrated bifurcated arrangement should not be construed in a limiting sense since the number of bifurcations (i.e., branches) need not be limited to two. It will be further appreciated that the respective bifurcated co-flows of reactants 106 and bi-furcated cross-flow portions 108 of combustion gases need not be co-axial with respect to one another. That is, the respective flow directions of the respective bifurcated flow of reactants and/or the respective bifurcated portions of the cross-flow of combustion gases may comprise different injection angles.

FIG. 8 is a schematic of still another non-limiting embodiment of a disclosed injector assembly 110 comprising nested structures 112, 114 that may be arranged to form respective nested flows of reactants (schematically represented by arrows 116) for mixing with a respective portion of the cross-flow of combustion gases (schematically represented by arrow 118). It will be appreciated that the illustrated nested arrangement should not be construed in a limiting sense since the number of nested structures need not be limited to any specific number. It will be further appreciated that the respective nested co-flows of reactants 116 and nested cross-flow of combustion gases 118 need not be co-axial with respect to one another. That is, the respective flow directions of the respective nested flow of reactants and/or the respective nested portions of the cross-flow of combustion gases may comprise different injection angles.

Without limiting aspects of disclosed injector assemblies to any particular principle of operation, one basic conceptual idea is to maximize or otherwise appropriately enhance the surface area available between co-mixing flow interfaces that may be formed between the exiting flow of reactants in a given injector assembly, the exiting cross-flow of combustion gases in the given injector assembly and the external cross-flow passing around the periphery of the given injector assembly. As will be appreciated from the variety of disclosed embodiments, this basic idea may be implemented in a variety of ways depending on the needs of a given application.

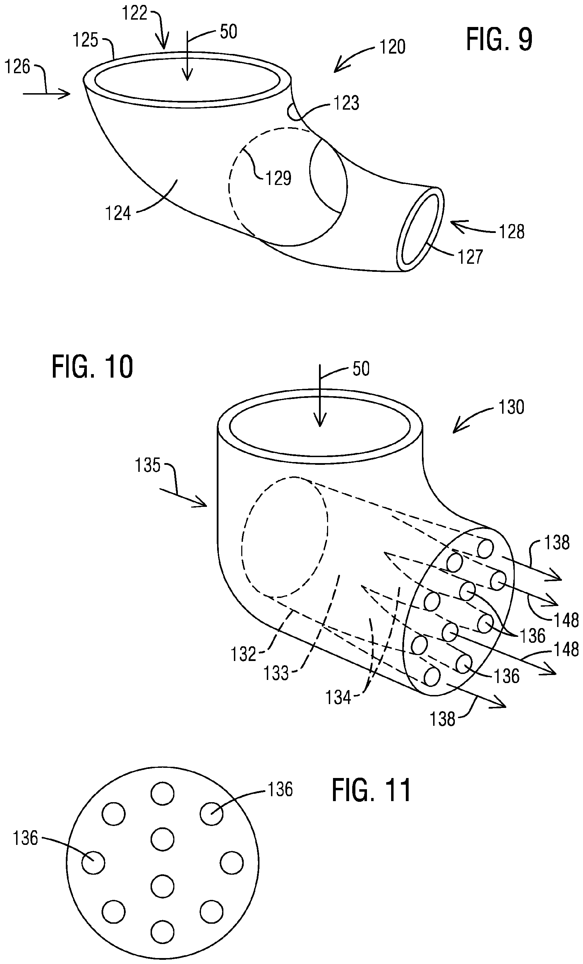

FIG. 9 is a schematic representation of yet still another non-limiting embodiment of a disclosed injector assembly 120. In this embodiment, which may not necessarily involve an internal cross-flow guiding structure, as described for the preceding disclosed embodiments, the inlet side 122 of a reactant-guiding structure 124 may comprise an oval-shaped body 125 (e.g., an oblong shaped body or airfoil shape) positioned to define a stream-lined body relative to the passing cross-flow of combustion gases (schematically represented by arrow 126).

The outlet side 128 of reactant-guiding structure 124 may comprise a further oval-shaped body 127 smaller in size relative to the size of oval-shaped body 125. In one non-limiting embodiment, further oval-shaped body 127 may be transversely disposed relative to the oval-shaped body 125 at the inlet 122 of reactant-guiding structure 124. In one non-limiting embodiment, curvilinear flow path 123 may transition through a circular cross-section 129 disposed between the oval-shaped body 125 at the inlet side reactant-guiding structure 124 and the further oval-shaped body 127 at the outlet side of reactant-guiding structure 124. Unless otherwise stated, transversely disposed in this context may be construed as the longitudinal axis of further oval-shaped body 127 being positioned at an angle of approximately 90° or otherwise substantially transversal relative to the longitudinal axis of the stream-lined body.

The stream-lined body disposed at the inlet side 122 of reactant-guiding structure 124 is effective for reducing cross-flow blockage, which in turn is effective to reduce pressure loss that otherwise would occur due to the relatively high subsonic Mach value of the passing cross-flow of combustion gases. The transversal orientation of the further oval-shaped body 127 at the outlet side of reactant-guiding structure 124 relative to orientation of the oval-shaped body 125 at the inlet side of reactant-guiding structure 124 is effective to increase a velocity gradient between a radially-upper co-mixing flow interface between the flow of injected reactants and a corresponding portion of the passing cross flow of combustion gases, which in turn is effective to increase shear-induced mixing between such co-flows.

It will be appreciated that the foregoing structural and/or operational relationships, as described in the context of FIG. 9, may be incorporated in any of the preceding disclosed embodiments or embodiments to be disclosed below. For example, inlet side 44 in the embodiment illustrated in FIG. 2, could be arranged as a stream-lined body (e.g., an oval-shaped body, oblong shaped body or airfoil so arranged) relative to the passing cross-flow of combustion gases. Similarly, outlet side 46 in the same embodiment could be arranged as a further oval-shaped body that may be transversely disposed relative to the stream-lined body at the inlet side.

FIG. 10 is a schematic representation of a further non-limiting embodiment of a disclosed injector assembly 130. In this embodiment, a cross-flow guiding structure 132 may comprise a cross-flow manifold arrangement 133 including an array of cross-flow conduits 134 fluidly coupled to an array of injection orifices 136 (see also FIG. 11) configured to inject an array of respective portions of the cross-flow of combustion gases received at the inlet side of cross-flow guiding structure 132 (schematically represented by arrow 135) for mixing with a surrounding exiting flow of reactants, schematically represented by arrows 138 in FIG. 10. This arrangement may be helpful for effectively cooling the conduits 134 that convey respective portions of the cross-flow of combustion gases (schematically represented by arrows 148 in FIG. 10) with the surrounding reactant flow, which is at a lower temperature relative to the temperature of the cross-flow of combustion gases.

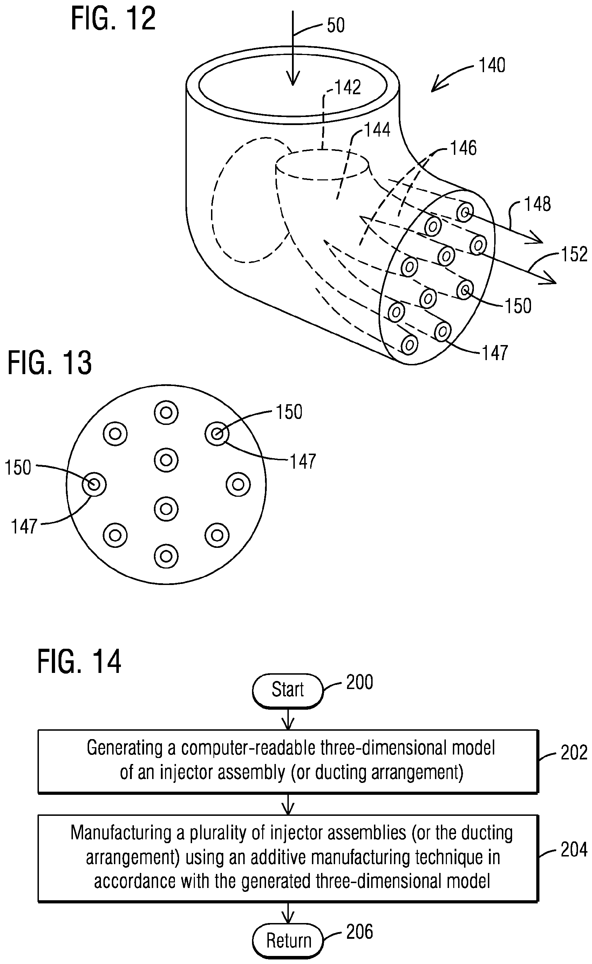

FIG. 12 is a schematic representation of still a further non-limiting embodiment of a disclosed injector assembly 140. In this embodiment, injector assembly 140 may further comprise a reactant-guiding structure 142 including a reactant manifold arrangement 144 including an array of reactant conduits 146 fluidly coupled to an array of injection orifices 147 (see also FIG. 13) configured to inject an array of respective reactant flows, schematically represented by arrows 152 in FIG. 12. Each respective exiting reactant flow in the array of respective reactant flows may be (but need not be) concentrically arranged for mixing with respective exiting portions in an array of injection orifices 150 injecting an array of respective portions of cross-flow of combustion gases (schematically represented by arrows 148 in FIG. 12). This arrangement may also be helpful for effectively cooling the conduits that convey respective portions of the cross-flow of combustion gases with the respective array of surrounding reactant flows, which, as noted above, are at a lower temperature relative to the temperature of the cross-flow of combustion gases.

In operation, disclosed injector assemblies can be configured to reduce total pressure loss while injecting a flow of reactants into a passing cross-flow of combustion gases and achieving an effective level of mixing of the injected reactants with the passing cross-flow of combustion gases.

In operation, disclosed embodiments are expected to be conducive to a combustion system capable of realizing approximately a 65% combined cycle efficiency or greater in a gas turbine engine. Disclosed embodiments are also expected to realize a combustion system capable of maintaining stable operation at turbine inlet temperatures of approximately 1700°C and higher while maintaining a relatively low level of NOx emissions, and acceptable temperatures in components of the engine without an increase in cooling air consumption.

FIG. 14 is a flow chart listing certain steps that may be used in a disclosed method for manufacturing disclosed injector assemblies and/or a ducting arrangement including such injector assemblies for a combustion system in a gas turbine engine. As shown in FIG. 14, after a start step 200, step 202 allows generating a computer-readable three-dimensional (3D) model, such as a computer aided design (CAD) model, of an injector assembly. Alternatively, in lieu of generating a computer-readable three-dimensional (3D) model of an injector assembly, one can generate a computer-readable three-dimensional (3D) model of a ducting arrangement including such injector assemblies. In either case, the model defines a digital representation of an injector assembly (or the ducting arrangement), as described above in the context of the preceding figures.

Prior to return step 206, step 204 allows manufacturing a plurality of injector assemblies (or the ducting arrangement) using an additive manufacturing technique in accordance with the generated three-dimensional model. Non-limiting examples of additive manufacturing techniques may include laser sintering, selective laser melting (SLM), direct metal laser sintering (DMLS), electron beam sintering (EBS), electron beam melting (EBM), etc. It will be appreciated that once a model has been generated, or otherwise available (e.g., loaded into a 3D digital printer, or loaded into a processor that controls the additive manufacturing technique), then manufacturing step 204 need not be preceded by a generating step 202.

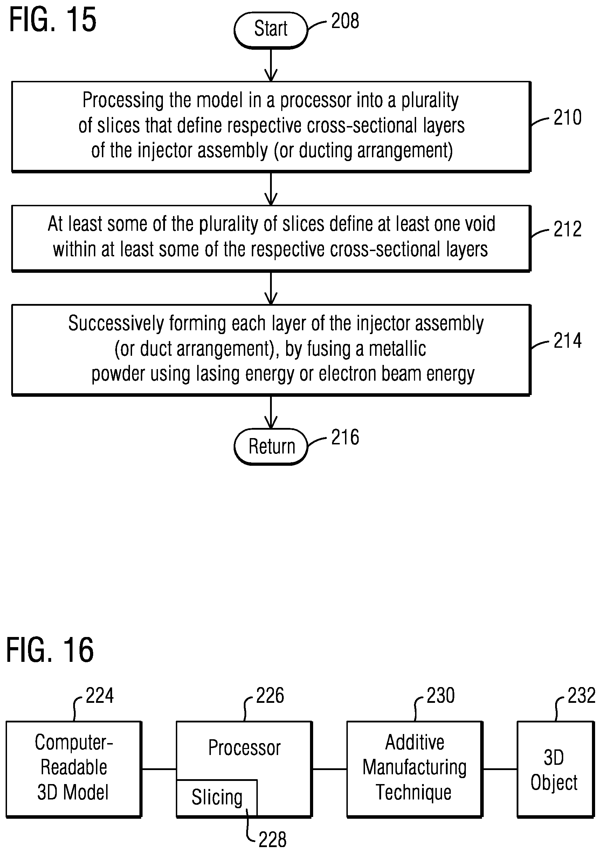

FIG. 15 is a flow chart listing further steps that may be used in the disclosed method for manufacturing the ducting arrangement. In one non-limiting embodiment, manufacturing step 204 (FIG. 14) may include the following: after a start step 208, step 210 allows processing the model in a processor into a plurality of slices that define respective cross-sectional layers of the injector assembly (or the ducting arrangement). As described in step 212, at least some of the plurality of slices define one or more voids (e.g., respective voids that may be used to form hollow portions of injector assembly 40, such as flow paths 47, 58 (FIG. 2), conduits 134 (FIG. 10), 146 (FIG. 12), etc.) within at least some of the respective cross-sectional layers of the injector assembly (or the ducting arrangement). Prior to return step 216, step 214 allows successively forming each layer of the injector assembly (or the ducting arrangement) by fusing a metallic powder using a suitable source of energy, such as without limitation, lasing energy or electron beam energy.

FIG. 16 is a flow sequence in connection with a disclosed method for manufacturing a 3D object 232, such as an injector assembly ducting arrangement. A computer-readable three-dimensional (3D) model 224, such as a computer aided design (CAD) model, of the 3D object may be processed in a processor 226, where a slicing module 228 converts model 224 into a plurality of slice files (e.g., 2D data files) that defines respective cross-sectional layers of the 3D object. Processor 226 may be configured to control an additive manufacturing technique 230 used to make 3D object 232.

In one non-limiting embodiment, an injector assembly is manufactured using an additive manufacturing technique in accordance with a computer-readable three-dimensional model of the injector assembly. The model of the injector assembly is processable in a processor configured to control the additive manufacturing technique.

The injector assembly may be characterized by a reactant-guiding structure having an inlet side and an outlet side, the reactant-guiding structure defining a curvilinear flow path to route a flow of reactants from a first flow direction at the inlet side to a second flow direction at the outlet side toward the cross-flow of combustion gases. The second flow direction may be arranged to achieve a desired injection angle of the flow of reactants relative to the cross-flow of combustion gases.

The injector assembly may be further characterized by a cross-flow guiding structure having an inlet side and an outlet side, the cross-flow guiding structure defining a generally axially-extending flow path to route through the injector assembly a portion of cross-flow of combustion gases received at the inlet side of the cross-flow guiding structure toward the outlet side of the cross-flow guiding structure. A flow direction of the portion of the cross-flow of combustion gases exiting at the outlet side of the reactant-guiding structure may be arranged to achieve a desired injection angle relative to the flow direction of the flow of reactants at the outlet side of the reactant-guiding structure.

In one non-limiting embodiment, a duct arrangement is manufactured using an additive manufacturing technique in accordance with a computer-readable three-dimensional model of the duct arrangement. The model of the duct arrangement is processable in a processor configured to control the additive manufacturing technique.

The duct arrangement may be characterized by a flow-accelerating structure having an inlet and an outlet, the inlet of the flow-accelerating structure fluidly coupled to receive a flow of combustion gases from a combustor outlet. At least one injector assembly may be disposed between the inlet and the outlet of the flow-accelerating structure. The injector assembly may in turn be characterized by a reactant-guiding structure having an inlet side and an outlet side, the reactant-guiding structure defining a curvilinear flow path to route a flow of reactants from a first flow direction at the inlet side to a second flow direction at the outlet side toward the cross-flow of combustion gases. The second flow direction may be arranged to achieve a desired injection angle of the flow of reactants relative to the cross-flow of combustion gases.

The injector assembly may be further characterized by a cross-flow guiding structure having an inlet side and an outlet side, the cross-flow guiding structure defining a generally axially-extending flow path to route through the injector assembly a portion of cross-flow of combustion gases received at the inlet side of the cross-flow guiding structure toward the outlet side of the cross-flow guiding structure. A flow direction of the portion of the cross-flow of combustion gases exiting at the outlet side of the reactant-guiding structure may be arranged to achieve a desired injection angle relative to the flow direction of the flow of reactants at the outlet side of the reactant-guiding structure.

While embodiments of the present disclosure have been disclosed in exemplary forms, it will be apparent to those skilled in the art that many modifications, additions, and deletions can be made therein without departing from the scope of the invention as set forth in the following claims.

## Claims

1. An injector assembly (32, 40, 100, 110, 120, 130, 140) disposed in a combustion stage fluidly coupled to receive a cross-flow of combustion gases from a combustor outlet, the injector assembly (32, 40, 100, 110, 120, 130, 140) comprising:
a reactant-guiding structure (42, 124, 142) having an inlet side (44, 122) and an outlet side (46, 128), the reactant-guiding structure (42, 124, 142) defining a curvilinear flow path (47, 123) to route a flow of reactants from a first flow direction (50) at the inlet side (44, 122) to a second flow direction (52) at the outlet side (46, 128) toward the cross-flow of combustion gases;
**characterized by**
a cross-flow guiding structure (54, 132) having an inlet side (56) and an outlet side (57), the cross-flow guiding structure (54, 132) defining a generally axially-extending flow path (58) to route through the injector assembly (32, 40, 100, 110, 120, 130, 140) a portion of the cross-flow of combustion gases (60) received at the inlet side (56) of the cross-flow guiding structure (54, 132) toward the outlet side (57) of the cross-flow guiding structure (54, 132).

2. The injector assembly (32, 40, 100, 110, 120, 130, 140) of claim 1, wherein the second flow direction (52) is arranged to achieve a desired injection angle (θ) of the flow of reactants relative to the cross-flow of combustion gases.

3. The injector assembly (32, 40, 100, 110, 120, 130, 140) of claim 2, wherein the desired injection angle (θ) of the flow of reactants relative to the cross-flow of combustion gases is in a range from approximately 0° to approximately 90°.

4. The injector assembly (32, 40, 100, 110, 120, 130, 140) of claim 1, wherein the flow of reactants exiting at the outlet side (46) of the reactant-guiding structure (42) and the portion of the cross-flow of combustion gases exiting at the outlet side (57) of the cross-flow guiding structure (54) are arranged relative to one another to form a first co-mixing flow interface (63) between an inner portion of the exiting flow of reactants and a corresponding portion of the exiting portion of the cross-flow of combustion gases.

5. The injector assembly (32, 40, 100, 110, 120, 130, 140) of claim 4, wherein the flow of reactants exiting at the outlet side (46) of the reactant-guiding structure (42) and a cross-flow of combustion gases passing along a periphery of the injector assembly (32, 40, 100, 110, 120, 130, 140) are arranged relative to one another to form a second co-mixing flow interface (64) between an outer portion of the exiting flow of reactants and a corresponding portion of the passing cross-flow of combustion gases.

6. The injector assembly (32, 40, 100, 110, 120, 130, 140) of claim 1, wherein the flow of reactants exiting at the outlet side (46) of the reactant-guiding structure (42) and the portion of the cross-flow of combustion gases exiting at the outlet side (57) of the cross-flow-guiding structure (54) form substantially concentric co-flows.

7. The injector assembly (32, 40, 100, 110, 120, 130, 140) of claim 1, wherein a flow direction of the portion of the cross-flow of combustion gases exiting at the outlet side (57) of the cross-flow guiding structure (54) is arranged to achieve a desired injection angle (θ) relative to the flow direction of the flow of reactants at the outlet side (46) of the reactant-guiding structure (42).

8. The injector assembly (32, 40, 100, 110, 120, 130, 140) of claim 1, wherein the reactant-guiding structure (42) and the cross-flow guiding structure (54) respectively comprise bifurcated structures (102, 104) to provide respective bifurcated flow of reactants (106) for mixing with respective bifurcated portions of the cross-flow of combustion gases.

9. The injector assembly (32, 40, 100, 110, 120, 130, 140) of claim 8, wherein respective flow directions of the respective bifurcated flow of reactants (106) and/or the respective bifurcated portions of the cross-flow of combustion gases (108) comprise different injection angles (θ).

10. The injector assembly (32, 40, 100, 110, 120, 130, 140) of claim 1, wherein the reactant-guiding structure (42) and the cross-flow guiding structure (54) respectively comprise nested structures (112, 114) to provide respective nested flows of reactants for mixing with respective concentrically nested portions of the cross-flow of combustion gases (118).

11. The injector assembly (32, 40, 100, 110, 120, 130, 140) of claim 10, wherein respective flow directions of the respective nested flow of reactants and/or the respective nested portions of the cross-flow of combustion gases (118) comprise different injection angles (θ).

12. The injector assembly (32, 40, 100, 110, 120, 130, 140) of claim 1, wherein the cross-flow guiding structure (132) comprises a cross-flow manifold arrangement (133) including an array of cross-flow conduits (134) fluidly coupled to an array of injection orifices (136) configured to inject an array of respective portions of cross-flow of combustion gases received at the inlet side of the cross-flow guiding structure (132) for mixing with the exiting flow of reactants.

13. The injector assembly (32, 40, 100, 110, 120, 130, 140) of claim 12, wherein the reactant-guiding structure (142) further comprises a reactant manifold arrangement (144) including an array of reactant conduits (146) fluidly coupled to an array of injection orifices (147) configured to inject an array of respective reactant flows (152), each respective exiting reactant flow in the array of respective reactant flows (152) being arranged for mixing with a respective exiting portion in the array of cross-flows of combustion gases (148).

14. The injector assembly (32, 40, 100, 110, 120, 130, 140) of claim 1, wherein the reactant-guiding structure (42, 124, 142) and the cross-flow guiding structure (54, 132) comprise a unitized structure.

## Patentansprüche

1. Einspritzventilanordnung (32, 40, 100, 110, 120, 130, 140), die in einer Verbrennungsstufe angeordnet ist, die fluidisch so gekoppelt ist, dass sie einen Querstrom von Verbrennungsgasen aus einem Brennkammerauslass aufnimmt, wobei die Einspritzventilanordnung (32, 40, 100, 110, 120, 130, 140) Folgendes umfasst:
eine reaktionsmittelführende Struktur (42, 124, 142), die eine Einlassseite (44, 122) und eine Auslassseite (46, 128) aufweist, wobei die reaktionsmittelführende Struktur (42, 124, 142) eine gekrümmte Strömungsstrecke (47, 123) definiert, um einen Strom von Reaktionsmitteln von einer ersten Strömungsrichtung (50) auf der Einlassseite (44, 122) zu einer zweiten Strömungsrichtung (52) auf der Auslassseite (46, 128) in Richtung zu dem Querstrom von Verbrennungsgasen zu leiten,
**gekennzeichnet durch**
eine querstromführende Struktur (54, 132), die eine Einlassseite (56) und eine Auslassseite (57) aufweist, wobei die querstromführende Struktur (54, 132) eine sich im Allgemeinen axial erstreckende Strömungsstrecke (58) definiert, um durch die Einspritzventilanordnung (32, 40, 100, 110, 120, 130, 140) einen Teil des auf der Einlassseite (56) der querstromführenden Struktur (54, 132) aufgenommenen Querstroms von Verbrennungsgasen (60) in Richtung zu der Auslassseite (57) der querstromführenden Struktur (54, 132) zu leiten.

2. Einspritzventilanordnung (32, 40, 100, 110, 120, 130, 140) nach Anspruch 1, wobei die zweite Strömungsrichtung (52) so angeordnet ist, dass sie einen gewünschten Einspritzwinkel (θ) des Stroms von Reaktionsmitteln relativ zu dem Querstrom von Verbrennungsgasen erreicht.

3. Einspritzventilanordnung (32, 40, 100, 110, 120, 130, 140) nach Anspruch 2, wobei der gewünschte Einspritzwinkel (θ) des Stroms von Reaktionsmitteln relativ zu dem Querstrom von Verbrennungsgasen im Bereich von ca. 0° bis ca. 90° liegt.

4. Einspritzventilanordnung (32, 40, 100, 110, 120, 130, 140) nach Anspruch 1, wobei der Strom von Reaktionsmitteln, der auf der Auslassseite (46) der reaktionsmittelführenden Struktur (42) austritt, und der Teil des Querstroms von Verbrennungsgasen, der auf der Auslassseite (57) der querstromführenden Struktur (54) austritt, relativ zueinander angeordnet sind, um eine erste Vermischungsstromgrenzfläche (63) zwischen einem inneren Teil des austretenden Stroms von Reaktionsmitteln und einem entsprechenden Teil des austretenden Teils des Querstroms von Verbrennungsgasen zu bilden.

5. Einspritzventilanordnung (32, 40, 100, 110, 120, 130, 140) nach Anspruch 4, wobei der auf der Auslassseite (46) der reaktionsmittelführenden Struktur (42) austretende Strom von Reaktionsmitteln und ein entlang einem Umfang der Einspritzventilanordnung (32, 40, 100, 110, 120, 130, 140) vorbeifließender Querstrom von Verbrennungsgasen relativ zueinander angeordnet sind, um eine zweite Vermischungsstromgrenzfläche (64) zwischen einem äußeren Teil des austretenden Stroms von Reaktionsmitteln und einem entsprechenden Teil des vorbeifließenden Querstroms von Verbrennungsgasen zu bilden.

6. Einspritzventilanordnung (32, 40, 100, 110, 120, 130, 140) nach Anspruch 1, wobei der auf der Auslassseite (46) der reaktionsmittelführenden Struktur (42) austretende Strom von Reaktionsmitteln und der Teil des auf der Auslassseite (57) der querstromführenden Struktur (54) austretenden Querstroms von Verbrennungsgasen im Wesentlichen konzentrische miteinander fließende Ströme bilden.

7. Einspritzventilanordnung (32, 40, 100, 110, 120, 130, 140) nach Anspruch 1, wobei eine Strömungsrichtung des Teils des auf der Auslassseite (57) der querstromführenden Struktur (54) austretenden Querstroms von Verbrennungsgasen so angeordnet ist, dass sie einen gewünschten Einspritzwinkel (θ) relativ zu der Strömungsrichtung des Stroms von Reaktionsmitteln auf der Auslassseite (46) der reaktionsmittelführenden Struktur (42) erreicht.

8. Einspritzventilanordnung (32, 40, 100, 110, 120, 130, 140) nach Anspruch 1, wobei die reaktionsmittelführende Struktur (42) und die querstromführende Struktur (54) jeweils gegabelte Strukturen (102, 104) umfassen, um einen jeweiligen gegabelten Strom von Reaktionsmitteln (106) zum Mischen mit entsprechenden gegabelten Teilen des Querstroms von Verbrennungsgasen bereitzustellen.

9. Einspritzventilanordnung (32, 40, 100, 110, 120, 130, 140) nach Anspruch 8, wobei jeweilige Strömungsrichtungen des jeweiligen gegabelten Stroms von Reaktionsmitteln (106) und/oder der jeweiligen gegabelten Teile des Querstroms von Verbrennungsgasen (108) unterschiedliche Einspritzwinkel (θ) umfassen.

10. Einspritzventilanordnung (32, 40, 100, 110, 120, 130, 140) nach Anspruch 1, wobei die reaktionsmittelführende Struktur (42) und die querstromführende Struktur (54) jeweils verschachtelte Strukturen (112, 114) umfassen, um jeweilige verschachtelte Ströme von Reaktionsmitteln zum Mischen mit jeweiligen konzentrisch verschachtelten Teilen des Querstroms von Verbrennungsgasen (118) bereitzustellen.

11. Einspritzventilanordnung (32, 40, 100, 110, 120, 130, 140) nach Anspruch 10, wobei jeweilige Strömungsrichtungen des jeweiligen verschachtelten Stroms von Reaktionsmitteln und/oder die jeweiligen verschachtelten Teile des Querstroms von Verbrennungsgasen (118) unterschiedliche Einspritzwinkel (θ) umfassen.

12. Einspritzventilanordnung (32, 40, 100, 110, 120, 130, 140) nach Anspruch 1, wobei die querstromführende Struktur (132) eine Querstromverteileranordnung (133) umfasst, die eine Anordnung von Querstromkanälen (134) umfasst, die fluidisch mit einer Anordnung von Einspritzöffnungen (136) gekoppelt ist, die dazu ausgelegt ist, eine Anordnung von jeweiligen Teilen des auf der Einlassseite der querstromführenden Struktur (132) aufgenommenen Querstroms von Verbrennungsgasen zum Mischen mit dem austretenden Strom von Reaktionsmitteln einzuspritzen.

13. Einspritzventilanordnung (32, 40, 100, 110, 120, 130, 140) nach Anspruch 12, wobei die reaktionsmittelführende Struktur (142) ferner eine Reaktionsmittelverteileranordnung (144) umfasst, die eine Anordnung von Reaktionsmittelkanälen (146) umfasst, die fluidisch mit einer Anordnung von Einspritzöffnungen (147) gekoppelt ist, die dazu ausgelegt ist, eine Anordnung von jeweiligen Reaktionsmittelströmen (152) einzuspritzen, wobei jeder jeweilige austretende Reaktionsmittelstrom in der Anordnung von jeweiligen Reaktionsmittelströmen (152) zum Mischen mit einem jeweiligen austretenden Teil in der Anordnung von Querströmen von Verbrennungsgasen (148) angeordnet ist.

14. Einspritzventilanordnung (32, 40, 100, 110, 120, 130, 140) nach Anspruch 1, wobei die reaktionsmittelführende Struktur (42, 124, 142) und die querstromführende Struktur (54, 132) eine modularisierte Struktur umfassen.

## Revendications

1. Ensemble injecteur (32, 40, 100, 110, 120, 130, 140) disposé dans un étage de combustion fluidiquement couplé pour recevoir un écoulement transversal de gaz de combustion à partir d'une sortie de chambre de combustion, l'ensemble injecteur (32, 40, 100, 110, 120, 130, 140) comprenant :
une structure de guidage de réactif (42, 124, 142) ayant un côté entrée (44, 122) et un côté sortie (46, 128), la structure de guidage de réactif (42, 124, 142) définissant un chemin d'écoulement curviligne (47, 123) pour acheminer un écoulement de réactifs depuis une première direction d'écoulement (50) sur le côté entrée (44, 122) jusqu'à une seconde direction d'écoulement (52) sur le côté sortie (46, 128) vers l'écoulement transversal de gaz de combustion ;
**caractérisé par**
une structure de guidage d'écoulement transversal (54, 132) ayant un côté entrée (56) et un côté sortie (57), la structure de guidage d'écoulement transversal (54, 132) définissant un chemin d'écoulement s'étendant généralement axialement (58) pour acheminer, à travers l'ensemble injecteur (32, 40, 100, 110, 120, 130, 140), une portion de l'écoulement transversal de gaz de combustion (60) reçus sur le côté entrée (56) de la structure de guidage d'écoulement transversal (54, 132) vers le côté sortie (57) de la structure de guidage d'écoulement transversal (54, 132).

2. Ensemble injecteur (32, 40, 100, 110, 120, 130, 140) selon la revendication 1, dans lequel
la seconde direction d'écoulement (52) est agencée pour atteindre un angle d'injection souhaité (θ) de l'écoulement de réactifs relativement à l'écoulement transversal de gaz de combustion.

3. Ensemble injecteur (32, 40, 100, 110, 120, 130, 140) selon la revendication 2, dans lequel
l'angle d'injection souhaité (θ) de l'écoulement de réactifs relativement à l'écoulement transversal de gaz de combustion est dans une plage d'approximativement 0° à approximativement 90°.

4. Ensemble injecteur (32, 40, 100, 110, 120, 130, 140) selon la revendication 1, dans lequel
l'écoulement de réactifs sortant sur le côté sortie (46) de la structure de guidage de réactif (42) et la portion de l'écoulement transversal de gaz de combustion sortant sur le côté sortie (57) de la structure de guidage d'écoulement transversal (54) sont agencés relativement l'un à l'autre pour former une première interface d'écoulement de co-mélange (63) entre une portion intérieure de l'écoulement sortant de réactifs et une portion correspondante de la portion sortante de l'écoulement transversal de gaz de combustion.

5. Ensemble injecteur (32, 40, 100, 110, 120, 130, 140) selon la revendication 4, dans lequel
l'écoulement de réactifs sortant sur le côté sortie (46) de la structure de guidage de réactif (42) et un écoulement transversal de gaz de combustion passant le long d'une périphérie de l'ensemble injecteur (32, 40, 100, 110, 120, 130, 140) sont agencés relativement l'un à l'autre pour former une seconde interface d'écoulement de co-mélange (64) entre une portion extérieure de l'écoulement sortant de réactifs et une portion correspondante de l'écoulement transversal passant de gaz de combustion.

6. Ensemble injecteur (32, 40, 100, 110, 120, 130, 140) selon la revendication 1, dans lequel
l'écoulement de réactifs sortant sur le côté sortie (46) de la structure de guidage de réactif (42) et la portion de l'écoulement transversal de gaz de combustion sortant sur le côté sortie (57) de la structure de guidage d'écoulement transversal (54) forment des co-écoulements sensiblement concentriques.

7. Ensemble injecteur (32, 40, 100, 110, 120, 130, 140) selon la revendication 1, dans lequel
une direction d'écoulement de la portion de l'écoulement transversal de gaz de combustion sortant sur le côté sortie (57) de la structure de guidage d'écoulement transversal (54) est agencée pour atteindre un angle d'injection souhaité (θ) relativement à la direction d'écoulement de l'écoulement de réactifs sur le côté sortie (46) de la structure de guidage de réactif (42).

8. Ensemble injecteur (32, 40, 100, 110, 120, 130, 140) selon la revendication 1, dans lequel
la structure de guidage de réactif (42) et la structure de guidage d'écoulement transversal (54) comprennent respectivement des structures bifurquées (102, 104) pour fournir un écoulement bifurqué respectif de réactifs (106) pour se mélanger avec des portions bifurquées respectives de l'écoulement transversal de gaz de combustion.

9. Ensemble injecteur (32, 40, 100, 110, 120, 130, 140) selon la revendication 8, dans lequel
des directions d'écoulement respectives de l'écoulement bifurqué respectif de réactifs (106) et/ou les portions bifurquées respectives de l'écoulement transversal de gaz de combustion (108) comprennent différents angles d'injection (θ).

10. Ensemble injecteur (32, 40, 100, 110, 120, 130, 140) selon la revendication 1, dans lequel
la structure de guidage de réactif (42) et la structure de guidage d'écoulement transversal (54) comprennent respectivement des structures imbriquées (112, 114) pour fournir des écoulements imbriqués respectifs de réactifs pour se mélanger avec des portions concentriquement imbriquées respectives de l'écoulement transversal des gaz de combustion (118).

11. Ensemble injecteur (32, 40, 100, 110, 120, 130, 140) selon la revendication 10, dans lequel
des directions d'écoulement respectives de l'écoulement imbriqué respectif de réactifs et/ou les portions imbriquées respectives de l'écoulement transversal de gaz de combustion (118) comprennent des angles d'injection différents (θ).

12. Ensemble injecteur (32, 40, 100, 110, 120, 130, 140) selon la revendication 1, dans lequel
la structure de guidage d'écoulement transversal (132) comprend un agencement de distributeur d'écoulement transversal (133) incluant une série de conduits d'écoulement transversal (134) fluidiquement couplés à une série d'orifices d'injection (136) configurés pour injecter une série de portions respectives d'écoulement transversal de gaz de combustion reçus sur le côté entrée de la structure de guidage d'écoulement transversal (132) pour se mélanger avec l'écoulement sortant de réactifs.

13. Ensemble injecteur (32, 40, 100, 110, 120, 130, 140) selon la revendication 12, dans lequel
la structure de guidage de réactif (142) comprend en outre un agencement de distributeur de réactif (144) incluant une série de conduits de réactif (146) fluidiquement couplés à une série d'orifices d'injection (147) configurés pour injecter une série d'écoulements de réactif respectifs (152), chaque écoulement de réactif sortant respectif dans la série d'écoulements de réactif respectifs (152) étant agencé pour se mélanger avec une portion sortante respective dans la série d'écoulements transversaux de gaz de combustion (148).

14. Ensemble injecteur (32, 40, 100, 110, 120, 130, 140) selon la revendication 1, dans lequel
la structure de guidage de réactif (42, 124, 142) et la structure de guidage d'écoulement transversal (54, 132) comprennent une structure unifiée.
